Europäisches Patentamt

European Patent Office

Office européen des brevets

(19)

(11) **EP 1 453 263 A1**

(12) **EUROPEAN PATENT APPLICATION**
published in accordance with Art. 158(3) EPC

(43) Date of publication:
**01.09.2004 Bulletin 2004/36**

(51) Int Cl.⁷: **H04L 27/00**

(21) Application number: **02788688.6**

(22) Date of filing: **29.11.2002**

(86) International application number:
**PCT/JP2002/012511**

(87) International publication number:
**WO 2003/049392 (12.06.2003 Gazette 2003/24)**

(84) Designated Contracting States:
**AT BE BG CH CY CZ DE DK EE ES FI FR GB GR
IE IT LI LU MC NL PT SE SK TR**

(30) Priority: **07.12.2001 JP 2001374587**

(71) Applicant: **Sony Corporation
Tokyo 141-0001 (JP)**

(72) Inventor: **SATO, Masanori, c/o Sony Corporation
Tokyo 141-0001 (JP)**

(74) Representative: **Nicholls, Michael John
J.A. KEMP & CO.,
14, South Square,
Gray's Inn
London WC1R 5JJ (GB)**

(54) **DATA COMMUNICATION CONTROL SYSTEM&comma; TRANSMITTER&comma; AND TRANSMITTING METHOD**

(57)   It is intended with the present invention to be capable of guaranteeing the quality of data communication conforming to the type of data to be transmitted. With the present invention the selection and use of an encoding modulation method is made conforming to a receiving quality estimate value notified from a portable phone 3 and the data type of send signal D15 to be transmitted to the portable phone 3, thereby it is made possible to modulate and transmit the send signal D15 with the quality of data communication predicted the portable phone 3 may require.

FIG. 3

**Description**

Technical Field

The present invention relates to a data communication control system, transmitter, and transmitting method, and is preferably applied to a cellular radio communication system for example.

Background Art

Up to now, in a cellular radio communication system, an area, for which a communication service is provided, is divided into cells of appropriate size, within each of which is installed a base station as a parent station, so that a portable phone as a child station can establish radio communication with a base station whose communication condition is presumably judged to be the most favorable.

In such a cellular radio communication system, when communication is performed actually, since it is presumed that the data error rate may be low for a portable phone of excellent receiving sensitivity located in the vicinity of a base station, a modulation method capable of transmitting at a high speed is selected, while as the data error rate may be presumably high for a portable phone of inferior receiving sensitivity existing in a position comparatively far away from the base station, a modulation method for a low-speed transmission with high data reliability is selected, and thereby an adaptive modulation is carried out in accordance with the receiving sensitivity level.

In such conventional cellular radio communication systems as configured above, it is often the case that data of various types, such as streaming data, downloading data of moving images, or text data of electronic mail, is exchanged between a base station and a portable phone, in addition to communication data.

With the conventional cellular radio communication systems, however, there is a case, for example, where data reliability may not be required depending upon a data type even when a portable phone is located at a position of excellent receiving sensitivity, whereas there is a case where data reliability is needed depending upon a data type even when a portable phone is located in a position of inferior receiving sensitivity.

Under such circumstances, in a conventional cellular radio communication system, a modulation method is selected only on the basis of the receiving sensitivity of a portable phone, which has given rise to a problem that the quality of data communication conforming to the data type is not necessarily guaranteed.

Description of the Invention

The present invention has been made in consideration the above points, and is intended to propose a data communication control system, transmitter, and transmitting method that are capable of guaranteeing the quality of data communication needed for the type of data to be transmitted.

In order to solve such problems with the present invention, in a data communication control system to control the quality of data communication conducted between a transmitter to send data and a receiver that receives the data from the transmitter through a predetermined communication path, the data communication control system comprises the receiver that estimates the receiving sensitivity in the communication path on the basis of the receiving data received from the transmitter and notifies the transmitter of the estimated result, and the transmitter that selects a modulation method based on the estimated result notified from the receiver and the type of data to be transmitted to a receiving apparatus and modulates and transmits the data with the modulation method, in order to thereby control the quality of data communication appropriately.

The use of a modulation method selected conforming to the receiving sensitivity notified from the receiver and the type of data to be transmitted to the receiver has made it possible to transmit data modulated in the estimated quality of data communication the receiver may require.

Brief Description of the Drawings

Fig. 1 is a schematic block diagram showing the configuration of a cellular radio communication system in a mode for carrying out the present invention.
Fig. 2 is a schematic block diagram showing the circuit configuration of a portable phone.
Fig. 3 is a schematic block diagram showing the circuit configuration of a base station.
Fig. 4 is a schematic diagram showing an encoding modulation method conforming to a mode.
Fig. 5 is a schematic diagram used in explaining the characteristics of modulation methods.
Fig. 6 is a schematic diagram showing the contents of receiving quality estimated data.

Fig. 7 is a schematic diagram showing an example of the criteria in selecting an encoding modulation method based on a receiving quality estimate value.

Fig. 8 is a schematic block diagram showing the circuit configuration of an adaptive encoding modulation section.

Fig. 9 is a flowchart showing a communication processing procedure conforming to a receiving quality estimate value and a type of data.

Fig.10 is a characteristic curve chart showing transmission efficiency.

Fig.11 is a characteristic curve chart showing bit error rates.

Best Mode for Carrying out the Invention

Detailed explanation is given hereunder on an embodiment of the present invention, referring to the drawings.

(1) Overall Configuration of Cellular Radio Communication System

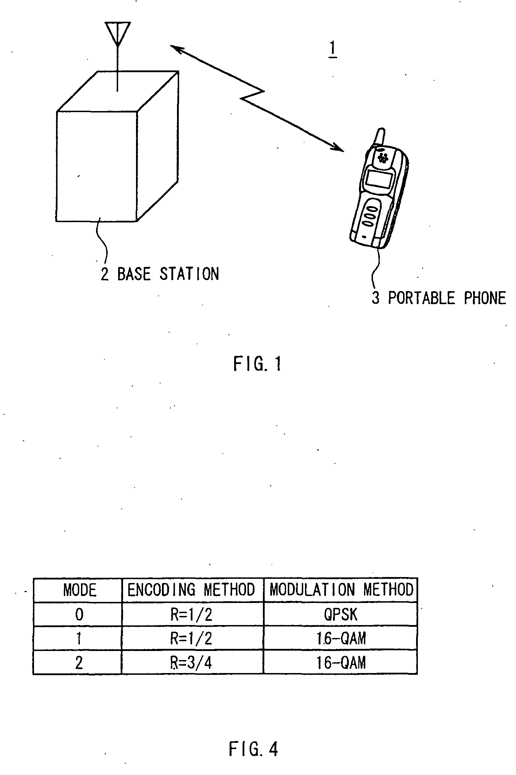

In Fig. 1, reference numeral 1 shows an overall cellular radio communication system as a data communication control system in the present invention, comprising a base station 2 as a parent station installed within a cell divided according to a predetermined size, and a portable phone 3 as a child station, wherein it is designed such that exchange is made between the base station 2 and the portable phone 3 for speech data, streaming data, downloading data of moving images, or text data of electronic mail, etc.

(1-1) Circuit Configuration of Portable phone

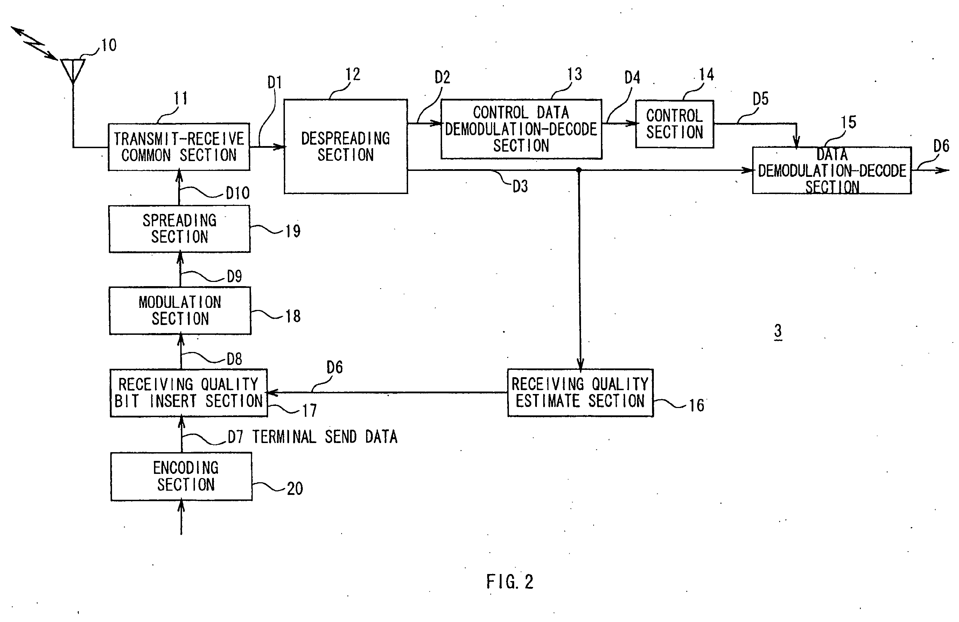

As shown in Fig. 2, the portable phone 3 receives a send signal from the base station 2 through an antenna 10, and the received signal is sent as receiving signal D1 to a despreading section 12 through a transmit-receive common section 11.

The despreading section 12 performs, for example, a despread spectrum process of a direct spreading method on the receiving signal D1, resulting in the generation of control channel data D2, which is sent to a control data demodulation-decode section 13, simultaneously sending user channel data D3 to a data demodulation-decode section 15 and a receiving quality estimate section 16.

The control data demodulation-decode section 13, after performing a demodulation process on the control channel data D2, reconstitutes control data D4 by further performing a decode process, and the control data D4 is sent to a control section 14 of the CPU (Central Processing Unit) structure.

The control section 14 sends to the data demodulation-decode section 15 a mode indication signal D5 to appoint a data demodulation-decoding method for the data demodulation-decode section 15 conforming to the control data D4.

Concretely, the control section 14 determines a demodulation processing method and a decode processing method responding to the control data D4, and the types of the demodulation processing method and the decode processing method are output as the mode indication signal D5.

The data demodulation-decode section 15 is designed to reconstitute receiving data D6 by performing a demodulation process and a decode process on the user channel data D3 with the demodulation processing method and decode processing method conforming to the mode indication signal D5.

The receiving quality estimate section 16 obtains a noise-to-signal power ratio based on either of a pilot symbol being time-division-multiplexed onto the user channel data D3 supplied from the despreading section 12, or a pilot channel symbol transmitted in parallel with the user channel data D3, and the noise-to-signal power ratio is sent to a receiving quality bit insert section 17 as 3-bit receiving quality estimated data D6 indicating the receiving sensitivity in the transmission path.

At this point the receiving quality estimate section 16 obtains a noise-to-signal power ratio periodically (e.g. for each frame) based on the pilot symbol or the pilot channel symbol, regardless of whether or not the user channel data D3 is present, thereby the receiving quality estimated data D6 can be fed back to the base station 2 periodically.

The receiving quality bit insert section 17 generates terminal send data D8 by inserting the 3-bit receiving quality estimated data D6 into the terminal send data D7 obtained by encoding with an encoding section 20, for example, speech data, and text data, etc., to be transmitted to the base station 2, and the terminal send data D8 is sent to a modulation section 18.

At this point, the receiving quality estimate section 16 is designed to generate the receiving quality estimated data D6 of 3-bit configuration by 3-bit quantization, thereby it is intended to make as small as possible a decrease in the amount of actual data corresponding to the terminal send data D7 out of the terminal send data D8 in a unit of frame generated by the receiving quality bit insert section 17, the decrease being possibly caused due to the data quantity of the receiving quality estimated data D6. Accordingly, it is not advisable to employ 4-bit quantization because the amount of actual data of the terminal send data D7 out of the terminal send data D8 could be reduced.

The modulation section 18 performs, for example, a QPSK (Quadrature Phase Shift Keying) modulation process on the terminal send data D8, and the modulated data D9 resulted from the process is sent to a spreading section 19. The spreading section 19 performs a spread spectrum process by the direct spreading method on the modulated data D9, and a terminal send signal D10 resulted from the process is transmitted to the base station 2 via the transmit - receive common section 11 and the antenna 10.

(1-2) Circuit Configuration of Base Station

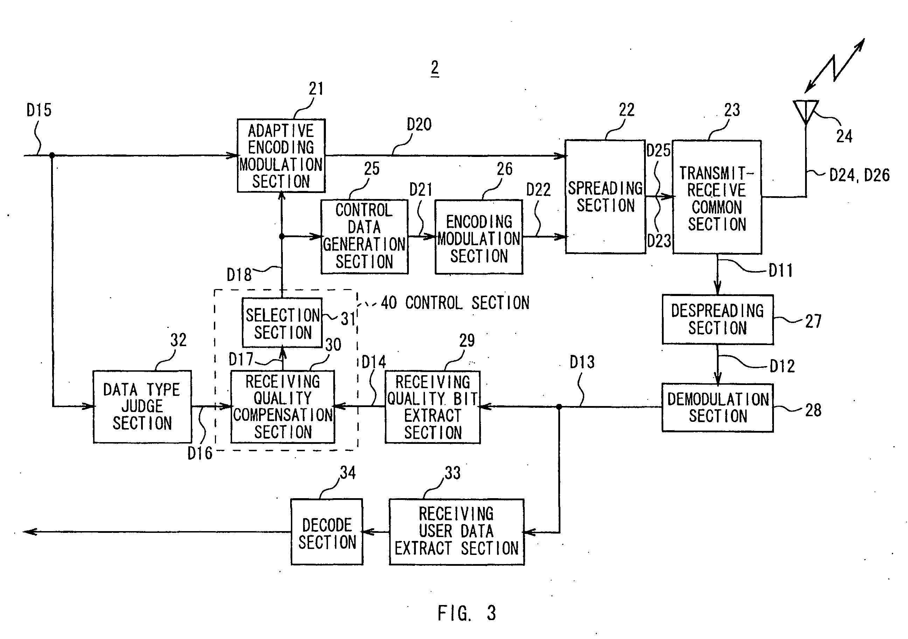

As shown in Fig. 3, the base station 2 receives the terminal send signal D10 transmitted from the portable phone 3 through an antenna 24, and this terminal send signal D10 is sent as terminal receiving signal D11 to a despreading section 27 through a transmit-receive common section 23.

The despreading section 27 performs the despread spectrum process of the direct spreading method on the terminal receiving signal D11 as being done in the portable phone 3, and the terminal receiving data D12 resulted from the process is sent to a demodulation section 28.

The demodulation section 28 reconstitutes the terminal receiving data D13 corresponding to the terminal send data D8 in the portable phone 3 by performing the QPSK demodulation process on the terminal receiving data 12, and the reconstituted terminal receiving data is sent to a receiving quality bit extract section 29 and a receiving user data extract section 33.

The receiving user data extract section 33 extracts receiving user data D33 out of the terminal receiving data D13, and sends this to a decode section 34. The decode section 34 decodes the receiving user data D33, and sends this to subsequent circuits (not shown in the figure).

The receiving quality bit extract section 29 extracts receiving quality estimated data D14 corresponding to the receiving quality estimated data D6 expressed in 3 bits out of the terminal receiving data D13, and sends this to a receiving quality compensation section 30 of a control section 40.

On the other hand, the base station 2 puts into an adaptive encoding modulation section 21 and a data type judge section 32 send signal D15 to be transmitted in response to the request from the portable phone 3. In the data type judge section 32, a judgment is made on what the send signal D15 is; speech data, streaming data, downloading data of moving images, or text data of electronic mail, etc., and the judged result is sent as data type judged signal D16 to the receiving quality compensation section 30 of the control section 40.

The receiving quality compensation section 30 is designed to compensate the receiving quality estimate value of the receiving quality estimated data D14 based on the receiving quality estimated data D14 supplied from the receiving quality bit extract section 29 and the data type judged signal D16 supplied from the data type judge section 32, and to send out the compensated results as compensated data D17 to a selection section 31 of the CPU structure.

The selection section 31 selects an encoding modulation method for the adaptive encoding modulation section 21 based on the compensated data D17 supplied from the receiving quality compensation section 30, and sends encoding modulation mode appoint signal D18, which appoints the selected encoding modulation method, to the adaptive encoding modulation section 21 and a control data generation section 25.

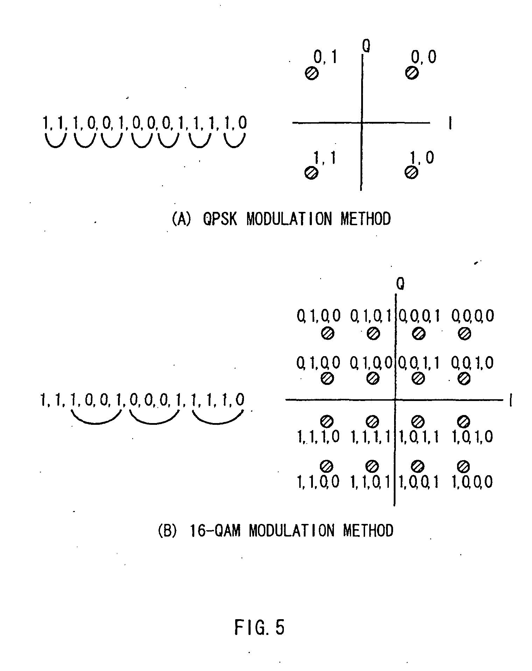

As shown in Fig. 4, there exist three kinds of encoding modulation methods selectable by the adaptive encoding modulation section 21: Mode 0; Mode 1; and Mode 2, and the section is designed to accommodate: when Mode 0 is specified by the encoding modulation mode appoint signal D18, the combination of R=1/2 encoding method, in which 1 bit of the redundant bit is added to 1 bit of input data, and QPSK modulation method is used; when Mode 1 is specified, the combination of R=1/2 encoding method, in which 1 bit of the redundant bit is added to 1 bit of input data, and 16-QAM (Quadrature Amplitude Modulation) modulation method is used; and when Mode 2 is specified, the combination of R=3/4 encoding method, in which 1 bit of the redundant bit is added to 3 bits of input data, and 16-QAM modulation method is used.

In this case, as shown in Fig. 5(A), it is designed wherein encoded 2-bit data is mapped into one symbol in the QPSK modulation method, and, as shown in Fig. 5(B), 4-bit data is mapped into one symbol in the 16-QAM modulation method, therefore, when a transmittable symbol rate is fixed as a constant, the amount of the data which is able to be transmitted by the 16-QAM modulation method becomes larger than by the QPSK modulation method.

However, in the 16-QAM modulation method case, it has a demerit that the noise-withstanding characteristic may become worse relying on the higher possibility of symbol misjudging due to the shorter distance between symbols, as compared with the QPSK modulation method case.

That is, regarding the amount of data transfer, it increases gradually in the order of; R=1/2 encoding method and QPSK modulation method; R=1/2 encoding method and 16-QAM modulation method; and R=3/4 encoding method and 16-QAM modulation method.

As to the noise-withstanding characteristic, it gets better gradually in the order of; R=3/4 encoding method and 16-QAM modulation method; R=1/2 encoding method and 16-QAM modulation method; and R=1/2 encoding method and QPSK modulation method.

Accordingly, when the communication characteristic of a transmission path from the base station 2 to the portable phone 3 is judged as good by the selection section 31 based on the compensated data D17 supplied from the receiving quality compensation section 30, the section 31 selects any encoding modulation method being capable of transferring a larger amount of data, and when the communication characteristic of the transmission path is judged as inferior, it selects any encoding modulation method being capable of transferring a suppressed amount of data which has better noise-withstanding characteristic, so that the data error characteristics could be improved.

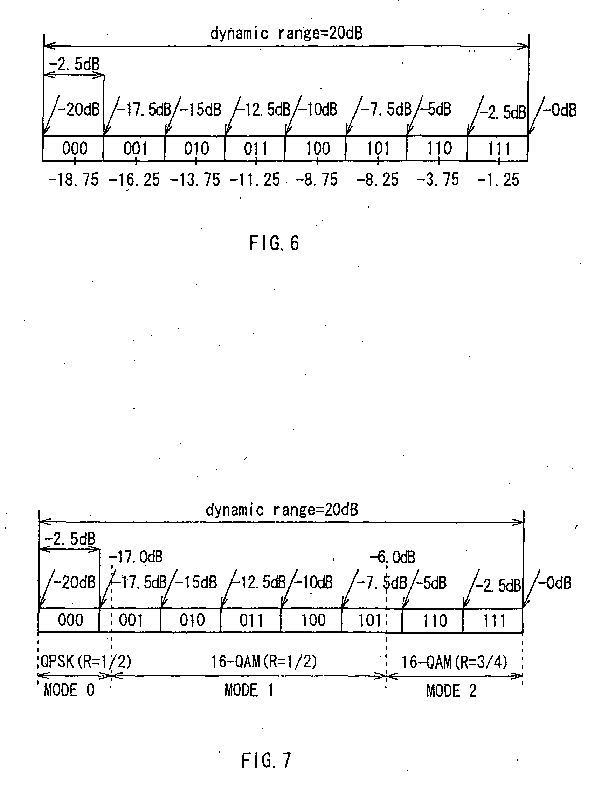

Practically, as shown in Fig. 6, the receiving quality estimated data D14, being of 3-bit configuration data, when the dynamic range of a receiving quality estimate value is 20[dB], shows a value having a width of 2.5[dB] for each frame of the receiving quality estimated data D14.

The receiving quality estimated data D14 shows that the communication quality of a transmission path is the worst when it is -20.0[dB], and the path is the best when be 0[dB].

When the receiving quality estimated data D14 is "000" for example, it shows that a receiving quality estimate value is within a range of from -17.6[dB] to -20.0[dB], and when the receiving quality estimated data D14 is "001", it indicates that a receiving quality estimate value is within a range of from - 15.1[dB] to -17.5[dB], and likewise eight types up to "111" of the receiving quality estimated data D14 are shown as such receiving quality estimate values having a width of 2.5[dB].

Thus, because the receiving quality estimated data D14 is of 3-bit configuration, and thus it is of the receiving quality estimate value with the width of 2.5[dB], and further the selection section 31 can not specify a relevant receiving quality estimate value under the present state, it is designed such that the center value within a width of 2.5[dB] is recognized as a receiving quality estimate value conforming to the receiving quality estimated data D14.

That is, when the receiving quality estimated data D14 is "000" for example, the selection section 31 works to recognize - 18.75[dB], which is the center value of a range of from -17.6[dB] to -20.0[dB], as the receiving quality estimate value.

Meanwhile, in the receiving quality compensation section 30, it is designed such that the compensated data D17 is generated in consideration of the data type judged signal D16 supplied from the data type judge section 32.

That is, in generating the compensated data D17 the receiving quality compensation section 30 performs weighting process on the receiving quality estimated data D14 supplied from the receiving quality bit extract section 29 conforming to the, data type of the send signal D15, so that the receiving quality estimated data D14 is compensated according to the data type.

Practically, when the data type judged signal D16 indicates that the greatest importance has been given to the data reliability in the send signal D15, such as speech data and streaming data, the receiving quality compensation section 30 makes compensation of shifting toward an inferior direction from the center value in a width of 2.5[dB] the receiving quality estimate value in the receiving quality estimated data D14, in order to select an encoding modulation method of high data reliability.

On the contrary, when the data type judged signal D16 indicates that the send signal D15 is of text data of electronic mail or still image data, for example, which requires no greater data reliability than speech data, the receiving quality compensation section 30 makes compensation of shifting toward a favorable direction from the center value in a width of 2.5[dB] the receiving quality estimate value in the receiving quality estimated data D14, in order to select an encoding modulation method capable of transmitting a large amount of data at a high speed even if some errors occur in data.

Practically, the receiving quality compensation section 30 attaches priority Data_Qos (Priority) according to the data type of a send signal D15 to be transmitted, and according to the following equation;

$$\mathrm{Mapping\_SIR=under\_limit}+\triangle \mathrm{q\cdot report\_value}+\triangle \mathrm{q/N\cdot Data\_Qos} \quad \cdots\cdots (1)$$

the receiving quality estimate value in the receiving quality estimated data D14 is to be compensated.

In this Equation, Mapping_SIR means a compensated value obtained by performing weighting process; under_limit a low limit value (-20.0[dB]) in a quantization dynamic range; $\triangle$ q a quantization step width (in this case, 2.5[dB]); report_value a receiving quality estimate value in the receiving quality estimated data D14, and Data_Qos a value being set up according to the priority of a data type in the send signal D15.

There exist eight types of receiving quality estimate values "000" to "111", shown as report_value, in the receiving quality estimated data D14, which are, after being converted into decimal numbers from binary numbers, namely "000"="0", "001"="1", "010"="2" to "111"="8", to be substituted into the Equation (1).

Also, the following values are prepared as Data_Qos to be set according to the priority: "0" for the speech data, "1" for the streaming data, "2" for the downloading data of moving images, and "3" for the text data of an electronic mail. That is, in this case, the highest priority is placed on the speech data because it requires higher data reliability than anything else, while text data of the electronic mail is given the lowest priority.

For instance, when the receiving quality estimated data D14 is "001" (in this case, -16.25[dB] is a receiving quality estimate value the selection section 31 recognizes before compensation), but when the data type of the send signal D15 to be transmitted is the speech data of priority "0", a compensated value (Mapping_SIR) of -17.50[dB] can be obtained by the receiving quality compensation section 30 with the weighting process according to Equation (1).

Accordingly, when the data type of the send signal D15 is speech data of priority "0", it is to be understood that the receiving quality compensation section 30 has implemented compensation of shifting toward an inferior direction from the center value of a width of 2.5[dB] a receiving quality estimate value in the receiving quality estimated data D14 by weighting process according to Equation (1), in order to consequently select an encoding modulation method of high data reliability by the selection section 31.

Likewise, when receiving quality estimated data D14 is "001" (in this case, -16.25[dB] is a receiving quality estimate value that the selection section 31 is to recognize before compensation) but when the data type of the send signal D15 to be transmitted is text data of priority "3", since no higher data reliability is required for it than for speech data, a compensated value (Mapping_SIR) of -15.625[dB] can be obtained by the selection section 31 by such weighting process according to Equation (1).

In this case, too, when the data type of the send signal,D15 is text data of priority "3", it is to be understood that the receiving quality compensation section 30 has made compensation of shifting toward a favorable direction from the center value of a width of 2.5[dB] the receiving quality estimate value in the receiving quality estimated data D14 by weighting process according to Equation (1), in order to consequently select an encoding modulation method capable of transmitting a large volume of transfer data at a high speed by the selection section 31.

Therefore, the selection section 31 is to select an encoding modulation method conforming to the compensated data D17 obtained by performing weighting process according to Equation (1), and at this juncture, as shown in Fig. 7, it is designed such, for example, that when the compensated value is -17[dB] or less, the combination of the R=1/2 encoding method and the QPSK modulation method in Mode 0 is selected, that when the compensated value is over -17[dB] but -6[dB] or less, the combination of the R=1/2 encoding method and the 16-QAM modulation method in Mode 1 is selected, and that when the compensated value exceeds -6[dB], the combination of the R=3/4 encoding method and the 16-QAM modulation method in Mode 2 is selected.

Accordingly, as described above, when the receiving quality estimated data D14 is "001" (in this case, a receiving quality estimate value before being compensated is -16.25[dB]), the selection section 31 ends up selecting the R=1/2 encoding method and the 16-QAM modulation method in Mode 1 that it should be, , however, when the data type of a send signal D15 to be transmitted is speech data of priority "0", the R=1/2 encoding method and the QPSK modulation method in Mode "0" are to be selected, conforming to the compensated data D17 of -17.50[dB] obtained by performing weighting process according to Equation (1).

Therefore, when speech data of high priority is to be transmitted with less data errors, the selection section 31 can select the R=1/2 encoding method and the QPSK modulation method in Mode 0 of high data reliability on the basis of the compensated data D17 (-17.50[dB]) supplied from the receiving quality compensation section 30; as a result, the optimum encoding modulation method can be specified to the adaptive encoding modulation section 21 with the modulation mode appoint signal D18, according to not only the receiving sensitivity but also the data type of the send signal D15.

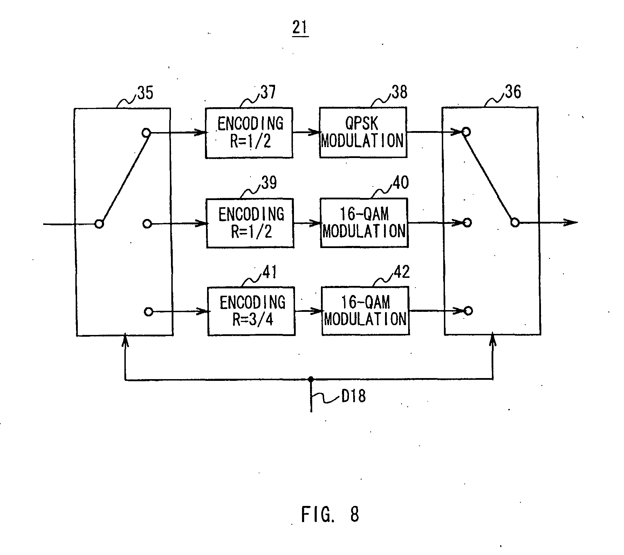

As shown in Fig. 8, the adaptive encoding modulation section 21 is designed to be capable of switching over connection destinations of switching circuits 35 and 36 conforming to the modulation mode appoint signal D18 coming from the selection section 31.

Therefore, the adaptive encoding modulation section 21 is designed such that; when an encoding circuit 37 and a QPSK modulation circuit 38 are selected in response to the modulation mode appoint signal D18, it performs an encoding modulation process conforming to the combination of the R=1/2 encoding method and the QPSK modulation method in Mode 0; when an encoding circuit 39 and a 16-QAM modulation circuit 40 are selected based on the modulation mode appoint signal D18, it performs an encoding modulation process conforming to the combination of the R=1/2 encoding method and the 16-QAM modulation method in Mode 1; and, when an encoding circuit 41 and a 16-QAM modulation circuit 42 are selected based on the modulation mode appoint signal D18, it performs an encoding modulation process conforming to the combination of the R=3/4 encoding method and the 16-QAM modulation method in Mode 2.

As a result, the adaptive encoding modulation section 21 generates send data D20 by performing an encoding modulation process on the send signal D15 conforming to the modulation mode appoint signal D18, and sends out the send data D20 to the spreading section 22.

Also, the selection section 31 sends the modulation mode appoint signal D18 to a control data generation section 25 as well, and so it generates a message which notifies the portable phone 3 of an encoding modulation method specified by the modulation mode appoint signal D18 to the adaptive encoding modulation section 21.

That is, the control data generation section 25 generates as control data D21 a message which notifies the portable phone 3 of the encoding modulation method used in the base station 2, and sends out the control data D21 to an encoding modulation section 26.

The encoding modulation section 26 performs a given encoding modulation process predetermined as default on the control data 21, and sends out thus obtained control modulation data D22 to the spreading section 22.

It is noted that the control modulation data D22 is to be exchanged between the base station 2 and the portable phone 3 through a control channel, and that the transmit power is regulated for each frame (0.667[msec.]) so that the power the portable phone 3 receives is to be kept at a constant level.

The spreading section 22 performs a spread spectrum process of the direct spreading method on the control modulation data D22, and transmits thus obtained control channel spread data D23, as control message data D24 in the control channel, to the portable phone 3 through a transmit-receive common section 23 and the antenna 24.

Therefore, the portable phone 3 (Fig. 2) receives the control message data D24, reconstitutes the control channel data D4 indicating the encoding modulation method performed by the adaptive encoding modulation section 21 of the base station 2, by performing a despreading process and a demodulation-decoding process on the data and is able to designate, in advance, to the data modulation-decode section 15 a demodulation-decoding method matching the encoding modulation method of the base station 2 as the mode indication signal D5 .

Subsequently, the spreading section 22 performs the spread spectrum process of the direct spreading method on the send data D20, too, supplied from the adaptive encoding modulation section 21, and the user channel spread data D25 obtained as a result is transmitted as user channel data D26 to the portable phone 3 through the transmit-receive common section 23 and the antenna 24. (1-3) Communication Processing Procedure Conforming to Receiving Quality Estimate Value and Data Type

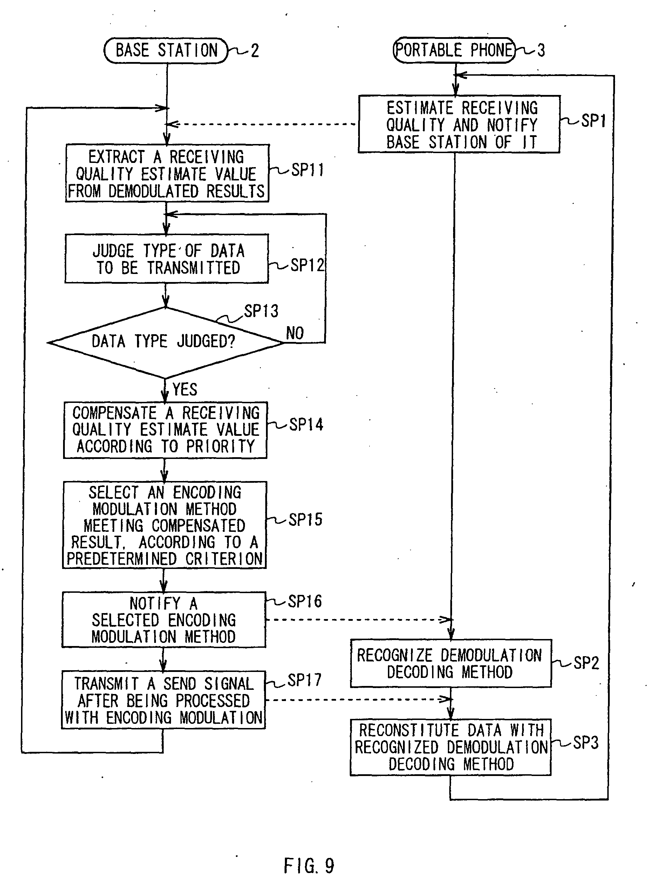

That is, in the cellular radio communication system 1 it is designed such that a communication processing procedure matching an aforementioned receiving quality estimate value and data type is carried out, according to a sequence chart as shown in Fig. 9, and at the step SP1, to begin with, the portable phone 3 notifies, as receiving quality estimated data D6, the base station 2 of a noise-to signal power ratio in a transmission path estimated by the receiving quality estimate section 16 on a frame basis, then the processing moves to the next step SP2.

Meanwhile, at the step SP11 the base station 2 extracts a receiving quality estimate value out of the demodulated result of the terminal send signal D10 received from the portable phone 3, and the processing moves to the next step SP12

At the step SP12 the base station 2 lets the data type judge section 32 perform the process of judging what is the data type of the send signal D15; speech data, streaming data, downloading data of moving images, or text data of electronic mails, then the processing moves to the next step SP13.

At the step SP13 the base station 2 judges whether or not the data type of the send signal D15 has been identified. A negative result, if obtained, at this step, means that priority meeting the data type is not yet to be ascertained, and that, as it is, compensation by performing weighting process on a receiving quality estimate value according to the data type can not be performed based on the Equation (1), and then the processing in the base station 2 returns to the step SP12, performing a discriminating process on the data type until it is decided.

On the other hand, should an affirmative result be obtained at the step SP13, it means that priority matching the data type has been ascertained, that is, compensation can be made on the receiving quality estimate value meeting the data type based on Equation (1), then the processing in the base station 2 moves on to the next step SP14.

At the step SP14 the base station 2 calculates compensated data D17 meeting the priority in accordance with Equation (1), and after the compensated data D17 is obtained as the compensated result of the receiving quality estimate value, the processing goes on to the step SP15.

At the step SP15 the base station 2 selects an encoding modulation method conforming to the compensated result of the compensated data D17 according to the criteria in selecting an encoding modulation method shown in Fig. 7, and then the processing goes on to the next step SP16.

At the step SP16 the base station 2 generates a message as the modulation mode appoint signal D18 to notify the portable phone 3 of the encoding modulation method selected at the step SP15, and after applying a predetermined encoding modulation process to the signal, notifies the portable phone 3, and the processing proceeds to the next step SP17.

Meanwhile, at the step SP2, with the notification from the base station 2 the portable phone 3 recognizes a demodulation-decoding method conforming to the encoding modulation method of the user channel data D26 transmitted thereafter, and the processing moves to the next step SP3.

Also, at the step SP17 the base station 2 performs an encoding modulation process on the send signal D15 with the encoding modulation method selected at the step SP15, and transmits the signal to the portable phone 3, then returns to the step SP11.

At the step SP3 the portable phone 3 performs a data reconstituting process according to the demodulation decoding method recognized at the step SP2, and the processing returns to the step SP1.

Like this, in the cellular radio communication system 1, as it is designed such that the base station 2 is notified of a receiving quality estimate value the portable phone 3 estimates at the step SP1 at an interval of 0.667[msec.] (every frame), so an appropriate measure can be taken flexibly in realtime even against the instantaneous deterioration of the receiving quality in a transmission path by implementing the communication processing procedure repeatedly on a frame basis, according to the aforementioned sequence chart.

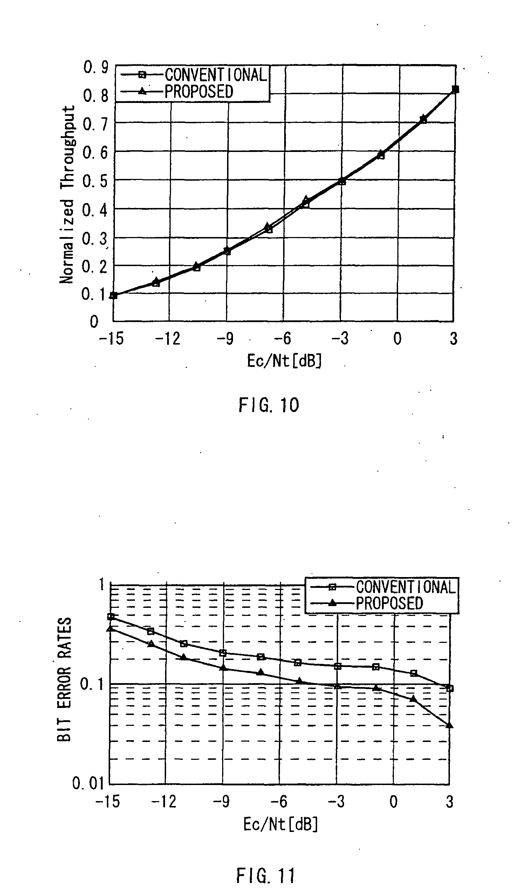

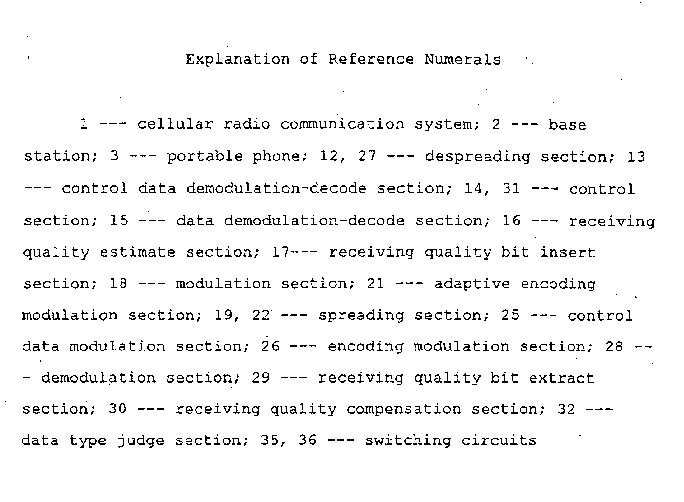

Accordingly, as shown in Fig. 10, as to the transmission efficiency with respect to the receiving quality (abscissa), namely throughput (ordinate), an encoding modulation method is selected with the main aim of enhancing the data error characteristics, that is, of enhancing the noise-withstanding characteristics as intended by the base station 2, with the final result that there is almost no difference in the transmission efficiency, compared with the conventional case of not implementing the communication processing procedures, or with the case of transmitting low-priority send signals D15 (for example, any text data of any electronic mail).

As shown in Fig. 11, however, as to the receiving characteristic with respect to the receiving quality (abscissa), or the bit error rate (ordinate), it has resulted in the fact that the bit error rate is substantially reduced, compared with the conventional case of not implementing the communication processing procedures, or with the case of transmitting low-priority send signals D15 (for example, any text data of any electronic mail).

(2) Operations and Effects

In the above configuration the base station 2 compensates relevant receiving quality estimate values by performing , predetermined weighting process on receiving quality estimate values notified from the portable phone 3 on the basis of priority according to the data type of send signals D15.

Then, according to the compensated results of receiving quality estimate values and the criteria in selecting an encoding modulation method (Fig. 7), the base station 2 selects an encoding modulation method in the adaptive encoding modulation section 21 from among the combinations of the R=1/2 encoding method and the QPSK modulation method in Mode 0, the R=1/2 encoding method and the 16-QAM modulation method in Mode 1, and the R=3/4 encoding method and the 16-QAM modulation method in Mode 2.

Accordingly, in the base station 2, when the receiving quality estimate values before being compensated are not those in the proximity of the boundaries among Mode 0, Mode 1, and Mode 2, the selection of an encoding modulation method makes no difference in the results, however, when those values are close to the boundaries, a different encoding modulation method may be selected depending upon the values of the compensated results, naturally resulting in substantial differences in the bit error rate.

Like this, when a receiving quality estimate value before being compensated is in the vicinity of a boundary, which is the criterion in selecting an encoding modulation method, and when the data type is recognized to be of high priority, the base station 2 is to select an encoding modulation method according to the compensated result, with the receiving quality estimate value shifted toward an inferior direction, thereby making it possible to reduce the bit error rate greatly and firmly.

Also, the base station 2 compensates a relevant receiving quality estimate value based on a receiving quality estimate value notified from a portable phone 3 and the priority conforming to the data type of the send signal D15 to be transmitted to the portable phone 3, and performs an encoding modulation process with the encoding modulation method selected according to the compensated result, so that the optimum data communication quality matching the data type the user may desire can be certainly guaranteed without letting the user of the portable phone 3 do any special operation.

According to the above configuration, the base station 2 in the cellular radio communication system 1 compensates receiving quality estimate values responding to the receiving quality estimate values notified from the portable phone 3 and the data type of the send signals D15 to be transmitted, and selects an encoding modulation method in the adaptive encoding modulation section 21 according to the compensated results and the criteria (Fig. 7) in selecting an encoding modulation method, thereby offering a wide selection of encoding modulation methods, with the result that the optimum data communication quality is surely guaranteed, conforming to a data type the user may desire.

(3) Other Embodiments of the Invention .

In the above embodiment of the invention, the explanation is given on the case of extracting receiving quality estimate values through the antenna 24 as a receiving means, the transmit-receive common section 23, the despreading section 27, the demodulation section 28, and the receiving quality bit extract section 29 on the base station 2 as a transmitter, and compensating the receiving quality estimate values by performing weighting process on them based on Equation (1) through the receiving quality compensation section 30 in the control section 40 as a control means with the main aim of increasing the reliability of data, however, the present invention is not limited to this, and the receiving quality estimate values may be compensated by performing weighting process with the main aim of enhancing the speed of data transmission, that is, by shifting the receiving quality estimate values toward the opposite direction (shifting toward a favorable direction when shifting toward an inferior direction, or shifting toward an inferior direction when shifting toward a favorable direction) to the way employed in the above embodiment of the invention.

Also, in the above embodiment of the invention, the explanation is given on the case of selecting an encoding modulation method from among three modes set up as selectable encoding modulation methods: Mode 0, Mode 1, and Mode 2, however, the present invention is not limited to this, and five or ten modes may be prepared; and modulation methods are not limited to the QPSK and the 16-QAM modulation, and a variety of other modulation methods may be used, such as ASK (Amplitude Shift Keying), FSK (Frequency Shift Keying), PSK (Phase Shift Keying), BPSK (Binary Phase Shift Keying), and MSK (Minimum Shift Keying).

Furthermore, in the above embodiment of the invention, the explanation is given on the case of denoting receiving quality estimated data D14 in 3 bits, however, the present invention is not limited to this, and the receiving quality estimated data D14 may be denoted in various other bit numbers, such as 2 bits or 4 bits in relationship with the amount of real data to be transmitted simultaneously on a frame basis. In the case of denoting receiving quality estimated data D14 in bits larger than three bits, it may be possible to notify the base station 2 of the receiving quality estimate values much more correctly.

Still furthermore, in the above embodiment of the invention, the explanation is given on the case of using the portable phone 3 as a receiver, however, the present invention is not limited to this, and a variety of other receivers may be used, such as PDA (Personal Digital Assistant) and personal computers equipped with the radio communication function.

According to the present invention as described above, because the selection of a modulation method is made according to the receiving sensitivity notified from a receiver and the type of data to be transmitted to the receiver, it is possible to transmit data modulated in a data communication quality estimated to be requested by the receiver, thus realizing a data communication control system, transmitter, and transmitting method that can warrant the data communication quality conforming to the type of data to be transmitted.

Industrial Utilization

A data communication control system, transmitter and transmitting method of the present invention are applied to various kinds of mobile communication systems adopting a cellular system composed of base stations and portable phone, for example.

## Claims

1.  A data communication control system for controlling quality of data communication between a transmitter transmitting data and a receiver receiving said data from the transmitter through a predetermined communication path, said data communication control system comprising:

    said receiver that estimates receiving sensitivity in said communication path based on the receiving data received from said transmitter and notifies said transmitter of the estimated result; and
    said transmitter that selects a modulation method conforming to said estimated result notified from said receiver and the type of said data to be transmitted to said receiving apparatus, modulates and transmits the data with the modulation method in order to control the quality of data communication adaptively.,

2.  The data communication control system according to Claim 1, wherein
    said transmitter uses as said estimated result a compensated value obtained by performing weighting process on said receiving sensitivity notified from said receiver conforming to the type of said data to be transmitted to said receiver.

3.  The data communication control system according to Claim 1, wherein
    said transmitter uses, when great importance is attached to reliability of data transmission as said quality of communication, as said estimated result a compensated value obtained by performing said weighting process in a way that said receiving sensitivity notified from said receiver is made to be a value inferior to the receiving sensitivity.

4.  The data communication control system according to Claim 1, wherein
    said transmitter uses, when great importance is attached to speed of data transmission as said quality of communication, as said estimated result a compensated value obtained by performing said weighting process in a way that said receiving sensitivity notified from said receiver is made to be a value better than the receiving sensitivity.

5. A transmitter comprising:

receiving means for receiving from a receiver an estimated result of receiving sensitivity in a communication path estimated on the basis of receiving data received through the predetermined communication path; and control means for selecting a modulation method conforming to said estimated result and the type of said data to be transmitted to said receiving apparatus and modulating and transmitting the data with the modulation method in order to adaptively control quality of data communication.

6. The transmitter according to Claim 5, wherein said control means uses as said estimated result a compensated result obtained by performing weighting process on said estimated result notified from said receiver conforming to the type of said data to be transmitted to said receiver.

7. The transmitter according to Claim 5, wherein said control means uses, when great importance is attached to reliability of data transmission as said quality of communication, as said estimated result a compensated value obtained by performing said weighting process in a way that said receiving sensitivity notified from said receiver is made to be a value inferior to the receiving sensitivity.

8. The transmitter according to Claim 5, wherein said control means uses, when great importance is attached to speed of data transmission as said quality of communication, as said estimated result a compensated value obtained by performing said weighting process in a way that said receiving sensitivity notified from said receiver is made to be a value better than the receiving sensitivity.

9. A transmitting method comprising:

the receiving step of receiving from a receiver an estimated result of receiving sensitivity in a communication path estimated on the basis of the receiving data received through the predetermined communication path; and the control step of selecting a modulation method conforming to said estimated result and the type of said data to be transmitted to said receiving apparatus, modulating and transmitting the data with the modulation method, in order to adaptively control said quality of data communication.

10. The transmitting method according to Claim 9, wherein said control step uses as said estimated result a compensated result obtained by performing weighting process on said estimated result notified from said receiver conforming to the type of said data to be transmitted to said receiver.

11. The transmitting method according to Claim 9, wherein said control step uses, when great importance is attached to reliability of data transmission as said quality of communication, as said estimated result a compensated value obtained by performing said weighting process in a way that said receiving sensitivity notified from said receiver is made to be a value inferior to the receiving sensitivity.

12. The transmitting method according to Claim 9, wherein said control step uses, when great importance is attached to speed of data transmission as said quality of communication, as said estimated result a compensated value obtained by performing said weighting process in a way that said receiving sensitivity notified from said receiver is made to be a value better than the receiving sensitivity.

2 BASE STATION

3 PORTABLE PHONE

FIG. 1

| MODE | ENCODING METHOD | MODULATION METHOD |
|------|-----------------|-------------------|
| 0 | R=1/2 | QPSK |
| 1 | R=1/2 | 16-QAM |
| 2 | R=3/4 | 16-QAM |

FIG. 4

FIG. 2

10

11 TRANSMIT-RECEIVE COMMON SECTION

12 DESPREADING SECTION

13 CONTROL DATA DEMODULATION-DECODE SECTION

14 CONTROL SECTION

15 DATA DEMODULATION-DECODE SECTION

16 RECEIVING QUALITY ESTIMATE SECTION

17 RECEIVING QUALITY BIT INSERT SECTION

18 MODULATION SECTION

19 SPREADING SECTION

20 ENCODING SECTION

D1
D2
D3
D4
D5
D6
D6
D7 TERMINAL SEND DATA
D8
D9
D10

3

FIG. 3

1, 1, 1, 0, 0, 1, 0, 0, 0, 1, 1, 1, 1, 0

(A) QPSK MODULATION METHOD

1, 1, 1, 0, 0, 1, 0, 0, 0, 1, 1, 1, 1, 0

(B) 16-QAM MODULATION METHOD

FIG. 5

FIG. 6

FIG. 7

FIG. 8

```
        ( BASE STATION )~2                    (PORTABLE PHONE)~3

                                          ┌──────────────────────┐
                                          │ ESTIMATE RECEIVING   │
                                          │ QUALITY AND NOTIFY   │~SP1
                                          │ BASE STATION OF IT   │
              ┌──────────────────────┐    └──────────────────────┘
              │ EXTRACT A RECEIVING  │
              │ QUALITY ESTIMATE VALUE│~SP11
              │FROM DEMODULATED RESULTS│
              └──────────────────────┘

              ┌──────────────────────┐
              │ JUDGE TYPE OF DATA   │~SP12
              │   TO BE TRANSMITTED  │
              └──────────────────────┘

                        SP13
                    ╱─────────╲        NO
                   ╱ DATA TYPE  ╲─────────
                   ╲  JUDGED?   ╱
                    ╲─────────╱
                       │ YES
              ┌──────────────────────┐
              │ COMPENSATE A RECEIVING│
              │ QUALITY ESTIMATE VALUE│~SP14
              │  ACCORDING TO PRIORITY│
              └──────────────────────┘

              ┌──────────────────────┐
              │   SELECT AN ENCODING │
              │   MODULATION METHOD  │
              │  MEETING COMPENSATED │~SP15
              │  RESULT, ACCORDING TO A│
              │PREDETERMINED CRITERION│
              └──────────────────────┘

              ┌──────────────────────┐
              │      NOTIFY A        │~SP16
              │   SELECTED ENCODING  │
              │   MODULATION METHOD  │
              └──────────────────────┘          ┌──────────────────────┐
                                                 │RECOGNIZE DEMODULATION│~SP2
                                                 │   DECODING METHOD    │
              ┌──────────────────────┐           └──────────────────────┘
              │ TRANSMIT A SEND SIGNAL│~SP17
              │  AFTER BEING PROCESSED│           ┌──────────────────────┐
              │WITH ENCODING MODULATION│          │RECONSTITUTE DATA WITH│
              └──────────────────────┘           │RECOGNIZED DEMODULATION│~SP3
                                                 │   DECODING METHOD    │
                                                 └──────────────────────┘
```

FIG. 9

FIG. 10

FIG. 11

Explanation of Reference Numerals

1 --- cellular radio communication system; 2 --- base station; 3 --- portable phone; 12, 27 --- despreading section; 13 --- control data demodulation-decode section; 14, 31 --- control section; 15 --- data demodulation-decode section; 16 --- receiving quality estimate section; 17--- receiving quality bit insert section; 18 --- modulation section; 21 --- adaptive encoding modulation section; 19, 22 --- spreading section; 25 --- control data modulation section; 26 --- encoding modulation section; 28 --- demodulation section; 29 --- receiving quality bit extract section; 30 --- receiving quality compensation section; 32 --- data type judge section; 35, 36 --- switching circuits

## INTERNATIONAL SEARCH REPORT

| | International application No. |
|---|---|
| | PCT/JP02/12511 |

**A. CLASSIFICATION OF SUBJECT MATTER**
Int.Cl⁷ H04L27/00

According to International Patent Classification (IPC) or to both national classification and IPC

**B. FIELDS SEARCHED**

Minimum documentation searched (classification system followed by classification symbols)
Int.Cl⁷ H04L27/00-27/38

Documentation searched other than minimum documentation to the extent that such documents are included in the fields searched
Jitsuyo Shinan Koho        1926-2002    Toroku Jitsuyo Shinan Koho   1994-2002
Kokai Jitsuyo Shinan Koho   1971-2002    Jitsuyo Shinan Toroku Koho   1996-2002

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2001-268148 A (Mitsubishi Electric Corp.), 28 September, 2001 (28.09.01), Figs. 1, 2, 14; columns 20, 22, 48, 56 (Family: none) | 1,5,9 |
| Y | JP 2001-268148 A (Mitsubishi Electric Corp.), 28 September, 2001 (28.09.01), Figs. 1, 2, 14; columns 20, 22, 48, 56 (Family: none) | 2-4,6-8, 10-12 |
| Y | JP 8-251140 A (NTT Mobile Communications Network Inc.), 27 September, 1996 (27.09.96), Figs. 1, 2; columns 12 to 13 (Family: none) | 2-4,6-8, 10-12 |

☒ Further documents are listed in the continuation of Box C.     ☐ See patent family annex.

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 25 December, 2002 (25.12.02) | 14 January, 2003 (14.01.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

20

## INTERNATIONAL SEARCH REPORT

| International application No. |
|---|
| PCT/JP02/12511 |

**C (Continuation).** DOCUMENTS CONSIDERED TO BE RELEVANT

| Category* | Citation of document, with indication, where appropriate, of the relevant passages | Relevant to claim No. |
|---|---|---|
| A | JP 2-278940 A (Matsushita Electric Industrial Co., Ltd.), 15 November, 1990 (15.11.90), Fig. 1; page 3, upper left column, columns 11 to 15 (Family: none) | 1-12 |
| A | JP 9-135275 A (Toshiba Corp.), 20 May, 1997 (20.05.97), Fig. 1; column 32 (Family: none) | 1-12 |

Form PCT/ISA/210 (continuation of second sheet) (July 1998)